# EUROPEAN PATENT SPECIFICATION

(11) **EP 2 757 739 B1**
(45) Date of publication and mention of the grant of the patent: **12.09.2018**
(21) Application number: 14150577.6
(22) Date of filing: 09.01.2014
(51) Int. Cl.: H04L 12/24

(54) **Method, controller system, network and computer program for controlling a software-defined network**
Verfahren, Steuerungssystem, Netzwerk und Computerprogramm zur Steuerung eines softwaredefinierten Netzwerks
Procédé, dispositif de commande, réseau et logiciel d'ordinateur pour contrôler un réseau défini par logiciel

(30) Priority: 21.01.2013 FI 20135058
(43) Date of publication of application: 23.07.2014
(73) Proprietor: Coriant Oy, 02630 Espoo (FI)
(72) Inventor: Jokinen, Hannu, 02360 Espoo (FI); Hallivuori, Ville, 02610 Espoo (FI); Nieminen, Juha-Petteri, 02280 Espoo (FI)
(74) Representative: Finnpatent Oy

(56) References cited:
- EP-A1- 2 487 843
- US-A1- 2011 134 931
- KWANGTAE JEONG ET AL: "QoS-aware Network Operating System for software defined networking with Generalized OpenFlows", 2012 IEEE NETWORK OPERATIONS AND MANAGEMENT SYMPOSIUM (NOMS 2012) : MAUI, HAWAII, USA, 16 - 20 APRIL 2012, IEEE, PISCATAWAY, NJ, 16 April 2012 (2012-04-16), pages 1167-1174, XP032448795, DOI: 10.1109/NOMS.2012.6212044 ISBN: 978-1-4673-0267-8

## Description

### Field of the invention

The invention relates generally to software-defined networking. More particularly, the invention relates to a method, a controller system, and a computer program for controlling a software-defined network "SDN".

### Background

Software-defined networking is an emerging architecture for data transfer networks. In a software-defined network "SDN", the control plane is separated from the data plane so that the control plane is implemented in one or more controllers that can be separate from the network elements and the data plane is implemented in the network elements. The network elements can be, for example, Internet Protocol "IP" routers, multiprotocol label switching "MPLS" nodes, packet optical switches, and/or Ethernet switches. Each network element may consist of a single apparatus or a combination of a plurality of apparatuses. Typically, the software-defined networking allows for quick experimenting and optimization of switching and/or routing policies and external access to the innards of network elements that formerly were closed and proprietary.

Internet Protocol "IP" based networks were initially built based on the concept of Autonomous Systems "AS". This concept allows networks to scale and extend by connected junctions that forward packets to a reasonable next hop based on partial need-to-know information. The AS principle works much like the traditional post office service, where a postal worker in a given city does not need to know all the tenants of all the streets in another city in order to choose a reasonable next hop for a letter at hand. This approach to networking is simple, and has proven resilient and scalable. This approach has, however, a few drawbacks. It does not allow the designated destinations, or tenants with home mail-boxes, to move without changing their identity as far as the packet delivery service is concerned. The topological location of destinations, which is the network interface they are attached to, dictates their identity related to the packet delivery service. In addition, using only the basic AS principle, it is hard to specify other qualities, such as logical grouping, access control, quality of service, intermediate network processing, or to specify aspects that relate to a sequence of packets that form a flow.

Using the analogy of the postal service, the software-defined networking works, for any given street location, so that all the letters from all the tenants would first be aggregated by a network element on an edge a software-defined network. This network element is configured to examine the current location for each of the letter-destinations using a global lookup mechanism. Based on that global lookup and on other globally defined and globally measured considerations, such as access control or remote location load conditions, the said network element places one or more of the original letters in an additional envelope addressed to each of the street locations where the destinations currently are. It then uses the normal postal service which works like the traditional Internet Protocol "IP" to get these outer envelopes to the remote locations. This is done based on the existing and scalable hop-by-hop forwarding services. The outer letters are then opened by a remote network element and the original envelopes are delivered to the destinations. It is to be noted that the above-presented analogy between the software-defined networking and the postal service is a strong simplification and it gives only a limited viewpoint about the versatile possibilities provided by the software-defined networking.

The software-defined networking is, however, not free from challenges. Some of the challenges are related to a need to control a software-defined network so that it is constantly capable of providing desired services with sufficiently high quality. Therefore, there is still a need for technical solutions for configuring software-defined networks.

Publication EP2487843 describes a data transfer network that comprises physical network elements adapted to process data frames according to control information defining operations corresponding to characteristics of the data frames. The data transfer network comprises a control server that comprises a first storage unit for storing configuration information about a virtual network configured to include virtual nodes that are virtualized versions of the physical network elements, and a second storage unit for storing virtual network identifying information for identifying a virtual network on the basis of characteristics of a received data frame. The control server identifies physical network elements that configure a virtual network that handles data frames having characteristics in common with a data frame received by one of the physical network elements and, if needed, updates the control information for the physical network elements.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the The invention is carried out according to the appended independent claims. Optional features of the invention are carried out according to the dependent claims.

In accordance with the invention, there is provided a new method for controlling a software-defined network. A method according to the invention comprises:
- receiving information indicative of forecast or current weather and provided by one or more external sources outside the software-defined network,
- generating configuration data for changing configuration of one or more network elements of the software-defined network on the basis of the received information in response to a situation in which the received information indicates an occurred or forthcoming change of one or more operating conditions of the software-defined network, and
- sending, to the one or more network elements of the software-defined network, the configuration data so as to adapt the software-defined network to the occurred or forthcoming change of the one or more operating conditions of the software-defined network.
In the above-described method, the configuration capabilities provided by the software-defined networking are utilized for dynamically optimizing the software-defined network with respect to changes that are not indicated by information gatherable inside the software-defined network but by information provided by the external sources outside the software-defined network. A method according to an exemplifying and non-limiting embodiment of the invention further comprises receiving information gathered inside the software-defined network and dynamically optimizing the software-defined network with respect to also changes that are indicated by the information gathered inside the software-defined network.

In accordance with the invention, there is provided also a new controller system for configuring a software-defined network. The controller system can be a single apparatus or a combination of a plurality of apparatuses capable of communicating with each other. A controller system according to the invention comprises a processing system and a data transfer interface for receiving information indicative of forecast or current weather and provided by one or more external sources outside the software-defined network, wherein the processing system is adapted to:
- generate configuration data for changing configuration of one or more network elements of the software-defined network on the basis of the received information in response to a situation in which the received information indicates an occurred or forthcoming change of one or more operating conditions of the software-defined network, and
- control the data transfer interface to send the configuration data to the one or more network elements of the software-defined network so as to adapt the software-defined network to the occurred or forthcoming change of the one or more operating conditions of the software-defined network

In accordance with the invention, there is provided also a new software-defined network that comprises one or more network elements and a controller system according to the invention for controlling the one or more network elements. It is to be noted that the controller system or one or more parts of it can also act as one or more network elements that can be e.g. an Internet Protocol "IP" router, a multiprotocol label switching "MPLS" node, a packet optical switch, and/or an Ethernet switch.

In accordance with the invention, there is provided also a new computer program for controlling a software-defined network. A computer program according to the invention comprises computer executable instructions for controlling a programmable processing system to:
- generate configuration data for changing configuration of one or more network elements of the software-defined network on the basis of information indicative of forecast or current weather and provided by one or more external sources outside the software-defined network in response to a situation in which the information indicates an occurred or forthcoming change of one or more operating conditions of the software-defined network, and
- control a data transfer interface to send, to the one or more network elements of the software-defined network, the first configuration data so as to adapt the software-defined network to the occurred or forthcoming change of the one or more operating conditions of the software-defined network.

In accordance with the invention, there is provided also a new computer program product. The computer program product comprises a non-volatile computer readable medium, e.g. a compact disc "CD", encoded with a computer program according to the invention.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in depending claims are mutually freely combinable unless otherwise explicitly stated.

### Brief description of the figures

The exemplifying and non-limiting embodiments of the invention and their advantages are explained in greater detail below with reference to the accompanying drawings, in which:
figure 1 shows a schematic illustration of a software-defined network according to an exemplifying embodiment of the invention,
figure 2 shows a schematic illustration of a controller system according to an exemplifying embodiment of the invention for controlling a software-defined network, and
figure 3 shows a flow chart of a method according to an exemplifying embodiment of the invention for configuring a network element of a software-defined network.

### Description of exemplifying embodiments

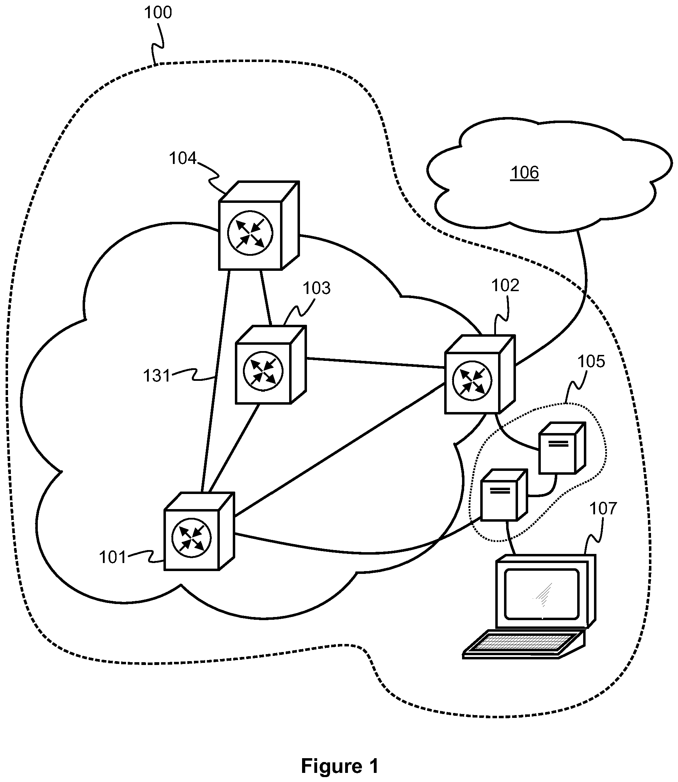

Figure 1 shows a schematic illustration of a software-defined network "SDN" 100 according to an exemplifying embodiment of the invention. The software-defined network comprises network elements 101, 102, 103, and 104 and a controller system 105. The network elements 101-104 of this exemplifying software-defined network are mutually interconnected with data transfer links as illustrated in figure 1. Furthermore, the exemplifying software-defined network "SDN" 100 may comprise other network elements that are not shown in figure 1. The network elements may be e.g. Internet Protocol "IP" routers, multiprotocol label switching "MPLS" nodes, packet optical switches, and/or Ethernet switches. Each network element may consist of a single apparatus or a combination of a plurality of apparatuses. As well, the controller system 105 may consist of a single apparatus or a combination of a plurality of apparatuses. In the exemplifying case illustrated in figure 1, the controller system 105 comprises two interconnected apparatuses. A terminal device 107 is connected to the controller system 105 and the network element 102 acts as a gateway to an external network 106 that can be e.g. the global Internet. The controller system 105 comprises a data transfer interface for receiving data from the terminal device 107 and/or from one or more other devices connected with data transfer links to the data transfer interface of the controller system. It is to be noted that the controller system 105 or one or more parts of it can also act as one or more network elements that can be e.g. an Internet Protocol "IP" router, a multiprotocol label switching "MPLS" node, a packet optical switch, and/or an Ethernet switch.

Each of the network elements 101-104 comprises a control processor section for maintaining a look-up system that comprises at least one look-up table defining actions to be executed in conjunction with managing data frames, and a data forwarding section for managing the data frames in accordance with the look-up system. The at least one look-up table of the look-up system may comprise, for example but not necessarily, one or more successive flow tables and a group table according to the OpenFlow specification. The OpenFlow is managed by the Open Networking Foundation "ONF". In the exemplifying case where the OpenFlow is used, each flow table in a network element contains a set of flow entries. Each flow entry may consist of match fields, counters, and a set of actions to apply to matching data frames. Matching typically starts at the first flow table and may continue to additional flow tables. Flow entries can be arranged into a priority order and the first matching entry in each table is the one being used. If a matching flow entry is found, the one or more actions associated with this specific flow entry are executed. If no match is found in a flow table, the data frame may be forwarded to the controller system 105 over an OpenFlow channel between the network element under consideration and the controller system 105, the data frame may be dropped, or the data frame may continue to the next flow table or to the group table. Actions associated with each flow entry may comprise for example data frame forwarding, data frame modification, group table processing, and pipeline processing. Pipeline processing actions allow data frames to be sent to subsequent flow tables for further processing and allow information, in the form of metadata, to be communicated between the flow tables. Table pipeline processing stops when the one or more actions associated with a matching flow entry does not specify a next table. At this point the data frame under consideration is usually modified and forwarded. The group table processing actions allow data frames to be sent to the group table for further processing and allow information, in the form of metadata, to be communicated to the group table. The group table contains group entries, where each group entry may contain a list of actions to be directed to data frames defined to belong to a particular group.

The controller system 105 is adapted to send, to each of the network elements 101-104, configuration data that comprises data items for configuring the network element to maintain the look-up system in accordance with, for example, a predetermined collection of actions defined by a protocol, e.g. the OpenFlow, for configuring the network elements. Furthermore, the configuration data may comprise one or more configuration programs each of which comprising one or more computer executable instructions defining an action or a chain of actions to be executed in conjunction with managing data frames in the network element under consideration. The control processor section of each of the network elements 101-104 can be adapted to associate each configuration program to the one or more look-up tables of the look-up system so that the configuration program is callable to be executed in conjunction with managing data frames with the aid of the one or more look-up tables. The data forwarding section of each of the network elements 101-104 can be adapted to execute the action or the chain of actions defined by the configuration program in response to a situation in which the managing a particular data frame includes an order to execute the configuration program. The action or the chain of actions defined by the configuration program may comprise for example: reading data from a data frame, modifying the data frame, selecting one or more of egress ports of the network element and forwarding the data frame and its possible duplicates to the selected one or more egress ports, selecting one of the look-up tables maintained by the network element and executing a look-up from the selected look-up table, performing arithmetic operations, branching operations, performing logical operations, reading metadata associated with the data frame, writing metadata associated with the data frame, modifying metadata associated with the data frame, dropping the data frame, and/or duplicating the data frame.

The controller system 105 is adapted to receive first information indicative of forecast or current weather and provided by one or more external sources outside the software-defined network 100. The first information can be received, for example, from or via the external network 106 or from the terminal device 107. The controller system 105 is adapted to generate first configuration data for changing configuration of one or more of the network elements 101-104 on the basis of the first information in response to a situation in which the first information indicates an occurred or forthcoming change of one or more operating conditions of the software-defined network 100. The algorithm for generating the first configuration data can be, for example, a heuristic algorithm based on experience and it can be implemented with the aid of a pre-stored collection of configuration data elements which are suitable for different operating conditions. It is also possible that techniques such as e.g. neural networks and/or fuzzy logics are used as a basis of the algorithm for generating the first configuration data. The controller system 105 is further adapted to send, to the one or more of the network elements 101-105, the first configuration data so as to adapt the software-defined network 100 to the occurred or forthcoming change of the one or more operating conditions. The above-mentioned first information may further indicate, for example, geographical distribution of the user population of the software-defined network 100. In this case, the controller system 105 is advantageously is adapted to generate the first configuration data for reconfiguring routing topology of at least a part of the software-defined network 100 and/or data management policy of one or more of the network elements 101-104 at least partly on the basis of changes of the geographical distribution of the user population. In the above-mentioned exemplifying case, the changes of the geographical distribution of the user population represent the occurred or forthcoming change of the one or more operating condition of the software-defined network 100.

On the geographical service area of the software-defined network 100, there can be, for example, concerts, festivals or other happenings, or traffic jams which may concentrate the user population on certain geographical areas and this may increase the current and/or foreseeable loading of those network elements that serve these geographical areas and/or the current and/or foreseeable loads of data transfer links connecting to these network elements. In an exemplifying case, the user population can be concentrated so that the current and/or foreseeable loading of e.g. the network element 101 is increased. In this exemplifying case, the routing topology of the software defined network 100 is advantageously changed so that e.g. a greater relative portion of data traffic between the network elements 102 and 104 gets routed via the network element 103 and, correspondingly, a smaller relative portion of this data traffic gets routed via the network element 101 so as to reduce the loading of the network element 101. Furthermore, the data management policy of one or more of the network elements 102-104 can be changed so that lower service class data traffic is no more forwarded via the network element 101 or the lower service class data traffic is limited more harshly before it is directed to the network element 101.

For another example, the above-mentioned first information provided by one or more external sources may indicate physical operating conditions of one or more data transfer links of the software defined network 100. In this case, the controller system 105 is advantageously is adapted to generate the first configuration data for reconfiguring the routing topology of at least a part of the software-defined network 100 and/or the data management policy of one or more of the network elements 101-104 on the basis of changes of the physical operating conditions. In this exemplifying case, the changes of the physical operating conditions of the data transfer links represent the occurred or forthcoming change of the one or more operating conditions of the software-defined network 100. The physical operating conditions may relate for example to forecast or current weather or to circumstances caused by man e.g. external radio signals emitted by devices outside the software defined network 100. In an exemplifying case, the direct data transfer link 131 between the network elements 101 and 104 can be radio link whose throughput is dependent on weather so that the throughput is smaller when it is raining than when there is dry weather. Furthermore, the throughput can be dependent on external radio signals on the frequency band of the data transfer link 131. In this exemplifying case, the routing topology of the software defined network 100 is advantageously changed so that a smaller relative portion of data traffic between the network elements 101 and 104 gets routed through the direct data transfer link 131 and, correspondingly, a greater relative portion of this data traffic gets routed via the network element 103 when, for example, it is raining or there is a forecast for rain so as to relieve the negative impact of rain on the quality of service.

Furthermore, the above-mentioned first information provided by one or more external sources may indicate forthcoming maintenance and/or management actions of an operator, and/or current and/or predicted activities of users. In this case, the controller system 105 is advantageously is adapted to generate the first configuration data for reconfiguring the routing topology of at least a part of the software-defined network 100 and/or the data management policy of one or more of the network elements 101-104 on the basis of the forthcoming maintenance and management actions of the operator, and/or the current and/or predicted activities of the users.

In a software-defined network according to an exemplifying embodiment of the invention, the controller system 105 is further adapted to receive second information gathered from the software-defined network 101. One or more of the network elements 101-104 can be adapted to analyze data traffic using, for example but not necessarily, deep packet inspection "DPI" and traffic counters and to send the information inspected to the controller system 105 or to some other data collection entity that is capable of interfacing with the controller system 105. One or more of the network elements 101-104 can as well send other data including for example time, user data e.g. in a form of anonymized aggregates, delay and loss measurements on data transfer links, upper layer metrics, e.g. metrics relevant to connectivity between a Radio Network Controller "RNC" and a node-B, routing and signaling protocol events and/or actions of the operator. In some cases, the upper layer metrics may be provided by one or more external sources outside the software-defined network 100 and/or by such devices within the software-defined network 100 that are not under the control of the controller system 105.

The controller system 105 can be adapted to generate second configuration data for changing configuration of one or more of the network elements 101-104 of the software-defined network 100 on the basis of the second information gathered from the software-defined network in response to a situation in which the second information indicates an occurred or forthcoming change in the software-defined network. Furthermore, the controller system 105 is adapted to send, to the one or more of the network elements 101-104, the second configuration data so as to adapt the software-defined network to the occurred or forthcoming change indicated by the second information. For a further example, the second information gathered from the software-defined network 101 can be related to trouble shooting. Based on the gathered data the controller system 105 can force handover from one network element or data transfer link to another network element or data transfer link just before a forecasted crash or service degradation due to a predicted failure.

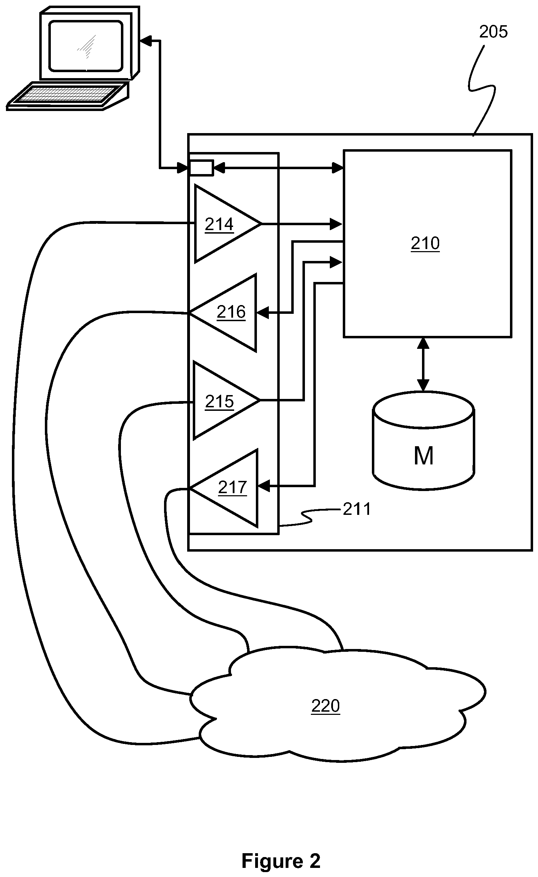

Figure 2 shows a schematic illustration of a controller system 205 according to an exemplifying embodiment of the invention for controlling a software-defined network "SDN". In this exemplifying case, the controller system is a single apparatus but, as mentioned earlier in this document, the controller system could as well be a combination of a plurality of apparatuses. The controller system comprises a data transfer interface 211 for receiving data and for transmitting data. The data transfer interface 211 comprises ingress ports 214 and 215 and egress ports 216 and 217 for connecting via data transfer links to a data transfer network 220. The data transfer interface 211 is suitable for receiving first information indicative of forecast or current weather and provided by one or more external sources outside the software-defined network. The controller system 205 comprises means for generating first configuration data for changing configuration of one or more network elements of the software-defined network on the basis of the first information in response to a situation in which the first information indicates an occurred or forthcoming change of one or more operating conditions of the software-defined network. The controller system 205 comprises means for controlling the data transfer interface 211 to send, to the one or more network elements of the software-defined network, the first configuration data so as to adapt the software-defined network to the occurred or forthcoming change of the one or more operating conditions. In the exemplifying case illustrated in figure 2, the above-mentioned means are implemented with a processing system 210.

In a controller system according to an exemplifying embodiment of the invention, the first information further indicates geographical distribution of user population of the software-defined network and the processing system 210 is adapted to generate the first configuration data for adapting the software-defined network to changes of the geographical distribution of the user population of the software-defined network.

In a controller system according to an exemplifying embodiment of the invention, the processing system 210 is adapted to generate the first configuration data for reconfiguring at least one of the following on the basis of the changes of the geographical distribution of the user population: routing topology of at least a part of the software-defined network, data management policy of one or more of the network elements of the software-defined network.

In a controller system according to an exemplifying embodiment of the invention, the first information indicates physical operating conditions of one or more data transfer links and the processing system 210 is adapted to generate the first configuration data for adapting the software-defined network to changes of the physical operating conditions of the one or more data transfer links.

In a controller system according to an exemplifying embodiment of the invention, the processing system 210 is adapted to generate the first configuration data for reconfiguring at least one of the following on the basis of the changes of the physical operating conditions of the one or more data transfer links: routing topology of at least a part of the software-defined network, data management policy of one or more of the network elements of the software-defined network.

In a controller system according to an exemplifying embodiment of the invention, the processing system 210 is further adapted to:
- receive second information gathered from the software-defined network,
- generate second configuration data for changing configuration of the one or more network elements of the software-defined network on the basis of the second information in response to a situation in which the second information indicates an occurred or forthcoming change in the software-defined network, and
- send, to the one or more network elements of the software-defined network, the second configuration data so as to adapt the software-defined network to the occurred or forthcoming change indicated by the second information.

In a controller system according to an exemplifying embodiment of the invention, the second information indicates loading of the software-defined network and the processing system 210 is adapted to generate the second configuration data for adapting the software-defined network to changes of the loading of the software-defined network.

In a controller system according to an exemplifying embodiment of the invention, the processing system 210 is adapted to generate the second configuration data for reconfiguring at least one of the following on the basis of the changes of the loading of the software-defined network: routing topology of at least a part of the software-defined network, data management policy of one or more of the network elements of the software-defined network.

In a controller system according to an exemplifying embodiment of the invention, the second information indicates measured quality of service provided by the software-defined network and the processing system 210 is adapted to generate the second configuration data for adapting the software-defined network to changes of the measured quality of service. The quality of service can be expressed with the aid of e.g. data transfer delays, data loss ratios, and/or jitter and/or wander of data transfer delays.

In a controller system according to an exemplifying embodiment of the invention, the processing system 210 is adapted to generate the second configuration data for reconfiguring at least one of the following on the basis of the changes of the measured quality of service: routing topology of at least a part of the software-defined network, data management policy of one or more of the network elements of the software-defined network.

The processing system 210 of the controller system shown in figure 2 can be implemented with one or more processor circuits, each of which can be a programmable processor circuit provided with appropriate software, a dedicated hardware processor such as, for example, an application specific integrated circuit "ASIC", or a configurable hardware processor such as, for example, a field programmable gate array "FPGA".

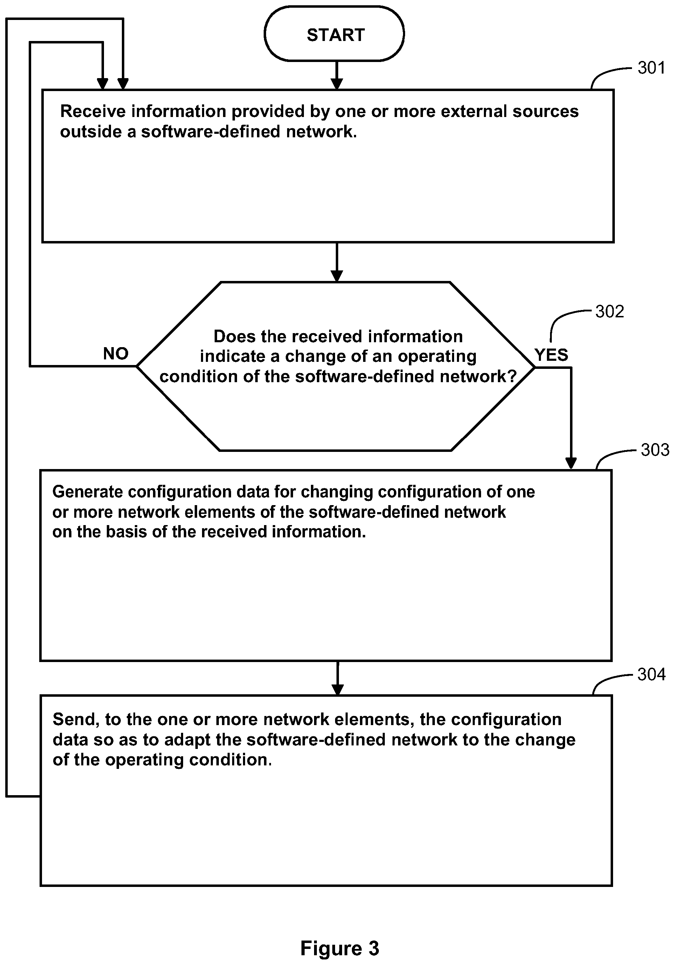

Figure 3 shows a flow chart of a method according to an exemplifying embodiment of the invention for controlling a software-defined network. The method comprises the following actions:
- action 310: receiving first information indicative of forecast or current weather and provided by one or more external sources outside the software-defined network,
- action 303: generating first configuration data for changing configuration of one or more network elements of the software-defined network on the basis of the first information in response to a situation 302 in which the first information indicates an occurred or forthcoming change of one or more operating conditions of the software-defined network, and
- action 304: sending, to the one or more network elements of the software-defined network, the first configuration data so as to adapt the software-defined network to the occurred or forthcoming change of the one or more operating conditions of the software-defined network.

In a method according to an exemplifying embodiment of the invention, the first information further indicates geographical distribution of user population of the software-defined network and the first configuration data is generated for adapting the software-defined network to changes of the geographical distribution of the user population of the software-defined network.

In a method according to an exemplifying embodiment of the invention, the first configuration data is generated for reconfiguring at least one of the following on the basis of the changes of the geographical distribution of the user population: routing topology of at least a part of the software-defined network, data management policy of one or more of the network elements of the software-defined network.

In a method according to an exemplifying embodiment of the invention, the first information indicates physical operating conditions of one or more data transfer links and the first configuration data is generated for adapting the software-defined network to changes of the physical operating conditions of the one or more data transfer links.

In a method according to an exemplifying embodiment of the invention, the first configuration data is generated for reconfiguring at least one of the following on the basis of the changes of the physical operating conditions of the one or more data transfer links: routing topology of at least a part of the software-defined network, data management policy of one or more of the network elements of the software-defined network.

A method according to an exemplifying embodiment of the invention further comprises:
- receiving second information gathered from the software-defined network,
- generating second configuration data for changing configuration of the one or more network elements of the software-defined network on the basis of the second information in response to a situation in which the second information indicates an occurred or forthcoming change in the software-defined network, and
- sending, to the one or more network elements of the software-defined network, the second configuration data so as to adapt the software-defined network to the occurred or forthcoming change indicated by the second information.

In a method according to an exemplifying embodiment of the invention, the second information indicates loading of the software-defined network and the second configuration data is generated for adapting the software-defined network to changes of the loading of the software-defined network.

In a method according to an exemplifying embodiment of the invention, the second configuration data is generated for reconfiguring at least one of the following on the basis of the changes of the loading of the software-defined network: routing topology of at least a part of the software-defined network, data management policy of one or more of the network elements of the software-defined network.

In a method according to an exemplifying embodiment of the invention, the second information indicates measured quality of service provided by the software-defined network and the second configuration data is generated for adapting the software-defined network to changes of the measured quality of service.

In a method according to an exemplifying embodiment of the invention, the second configuration data is generated for reconfiguring at least one of the following on the basis of the changes of the measured quality of service: routing topology of at least a part of the software-defined network, data management policy of one or more of the network elements of the software-defined network.

A computer program according to an exemplifying embodiment of the invention for controlling a software-defined network comprises computer executable instructions for controlling a programmable processing system to carry out a method according to any of the above-described exemplifying embodiments of the invention.

A computer program according to an exemplifying embodiment of the invention comprises software modules for controlling a software-defined network. The software modules comprise computer executable instructions for controlling a programmable processing system to:
- generate first configuration data for changing configuration of one or more network elements of the software-defined network on the basis of information indicative of forecast or current weather and provided by one or more external sources outside the software-defined network in response to a situation in which the information indicates an occurred or forthcoming change of one or more operating conditions of the software-defined network, and
- control a data transfer interface to send, to the one or more network elements of the software-defined network, the first configuration data so as to adapt the software-defined network to the occurred or forthcoming change of the one or more operating conditions of the software-defined network.

The software modules can be e.g. subroutines or functions implemented with a suitable programming language and with a compiler suitable for the programming language and the programmable processing system.

A computer program product according to an exemplifying embodiment of the invention comprises a computer readable medium, e.g. a compact disc ("CD"), encoded with a computer program according to an exemplifying embodiment of invention.

A signal according to an exemplifying embodiment of the invention is encoded to carry information defining a computer program according to an exemplifying embodiment of invention.

The specific examples provided in the description given above should not be construed as limiting the scope and/or the applicability of the appended claims.

## Claims

1. A controller system (105, 205) for controlling a software-defined network, the controller system comprising a processing system (210) and a data transfer interface (211) for receiving first information indicative of forecast or current weather and provided by one or more external sources outside the software-defined network, wherein the processing system is adapted to:
- generate first configuration data for changing configuration of one or more network elements of the software-defined network on the basis of the first information in response to a situation in which the first information indicates an occurred or forthcoming change of one or more operating conditions of the software-defined network, and
- control the data transfer interface to send the first configuration data to the one or more network elements of the software-defined network so as to adapt the software-defined network to the occurred or forthcoming change of the one or more operating conditions of the software-defined network.

2. A controller system according to claim 1, wherein the processing system is further adapted to:
- receive second information gathered from the software-defined network,
- generate second configuration data for changing configuration of the one or more network elements of the software-defined network on the basis of the second information in response to a situation in which the second information indicates an occurred or forthcoming change in the software-defined network, and
- send, to the one or more network elements of the software-defined network, the second configuration data so as to adapt the software-defined network to the occurred or forthcoming change indicated by the second information.

3. A controller system according to claim 1 or 2, wherein the first information indicates geographical distribution of user population of the software-defined network and the processing system is adapted to generate the first configuration data for adapting the software-defined network to changes of the geographical distribution of the user population of the software-defined network.

4. A controller system according to claim 3, wherein the processing system is adapted to generate the first configuration data for reconfiguring at least one of the following on the basis of the changes of the geographical distribution of the user population: routing topology of at least a part of the software-defined network, data management policy of one or more of the network elements of the software-defined network.

5. A controller system according to any of claims 1-4, wherein the first information indicates physical operating conditions of one or more data transfer links and the processing system is adapted to generate the first configuration data for adapting the software-defined network to changes of the physical operating conditions of the one or more data transfer links.

6. A controller system according to claim 5, wherein the processing system is adapted to generate the first configuration data for reconfiguring at least one of the following on the basis of the changes of the physical operating conditions of the one or more data transfer links: routing topology of at least a part of the software-defined network, data management policy of one or more of the network elements of the software-defined network.

7. A controller system according to claim 2, wherein the second information indicates loading of the software-defined network and the processing system is adapted to generate the second configuration data for adapting the software-defined network to changes of the loading of the software-defined network.

8. A controller system according to claim 7, wherein the processing system is adapted to generate the second configuration data for reconfiguring at least one of the following on the basis of the changes of the loading of the software-defined network: routing topology of at least a part of the software-defined network, data management policy of one or more of the network elements of the software-defined network.

9. A controller system according to claim 2 or 8, wherein the second information indicates measured quality of service provided by the software-defined network and the processing system is adapted to generate the second configuration data for adapting the software-defined network to changes of the measured quality of service.

10. A controller system according to claim 9, wherein the processing system is adapted to generate the second configuration data for reconfiguring at least one of the following on the basis of the changes of the measured quality of service: routing topology of at least a part of the software-defined network, data management policy of one or more of the network elements of the software-defined network.

11. A method for controlling a software-defined network, wherein the method comprises:
- receiving (301) first information indicative of forecast or current weather and provided by one or more external sources outside the software-defined network,
- generating (303) first configuration data for changing configuration of one or more network elements of the software-defined network on the basis of the first information in response to a situation (302) in which the first information indicates an occurred or forthcoming change of one or more operating conditions of the software-defined network, and
- sending (304), to the one or more network elements of the software-defined network, the first configuration data so as to adapt the software-defined network to the occurred or forthcoming change of the one or more operating conditions of the software-defined network.

12. A method according to claim 11, wherein the method further comprises:
- receiving second information gathered from the software-defined network,
- generating second configuration data for changing configuration of the one or more network elements of the software-defined network on the basis of the second information in response to a situation in which the second information indicates an occurred or forthcoming change in the software-defined network, and
- sending, to the one or more network elements of the software-defined network, the second configuration data so as to adapt the software-defined network to the occurred or forthcoming change indicated by the second information.

13. A computer program for controlling a software-defined network, wherein the computer program comprises computer executable instructions for controlling a programmable processing system to:
- generate first configuration data for changing configuration of one or more network elements of the software-defined network on the basis of first information indicative of forecast or current weather and provided by one or more external sources outside the software-defined network in response to a situation in which the first information indicates an occurred or forthcoming change of one or more operating conditions of the software-defined network, and
- control a data transfer interface to send, to the one or more network elements of the software-defined network, the first configuration data so as to adapt the software-defined network to the occurred or forthcoming change of the one or more operating conditions of the software-defined network.

14. A software-defined network comprising:
- one or more network elements (101-104), and
- a controller system (105) according to any of claims 1-10 for controlling the one or more network elements on the basis of information indicative of forecast or current weather and provided by one or more external sources outside the software-defined network.

15. A software-defined network according to claim 14, wherein the controller system is configured to use the OpenFlow as a communication method for a control plane of the software-defined network to communicate with a data plane of the software-defined network.

## Patentansprüche

1. Steuerungssystem (105, 205) zur Steuerung eines softwaredefinierten Netzwerks, wobei das Steuerungssystem ein Verarbeitungssystem (210) und eine Datentransferschnittstelle (211) zum Empfangen von ersten Informationen, die ein vorhergesagtes oder aktuelles Wetter angeben und von einer oder mehreren externen Quellen außerhalb des softwaredefinierten Netzwerks bereitgestellt werden, umfasst, wobei das Verarbeitungssystem zu Folgendem eingerichtet ist:
- Erzeugen von ersten Konfigurationsdaten zum Ändern einer Konfiguration von einem oder mehreren Netzwerkelementen des softwaredefinierten Netzwerks auf der Basis der ersten Informationen als Reaktion auf eine Situation, in der die ersten Informationen eine aufgetretene oder bevorstehende Änderung von einer oder mehreren Betriebsbedingungen des softwaredefinierten Netzwerks angeben, und
- Steuern der Datentransferschnittstelle dahingehend, die ersten Konfigurationsdaten an das eine oder die mehreren Netzwerkelemente des softwaredefinierten Netzwerks zu senden, um das softwaredefinierte Netzwerk an die aufgetretene oder bevorstehende Änderung von der einen oder den mehreren Betriebsbedingungen des softwaredefinierten Netzwerks anzupassen.

2. Steuerungssystem nach Anspruch 1, wobei das Verarbeitungssystem weiterhin zu Folgendem eingerichtet ist:
- Empfangen von zweiten Informationen, die von dem softwaredefinierten Netzwerk erfasst wurden,
- Erzeugen von zweiten Konfigurationsdaten zum Ändern einer Konfiguration von dem einen oder den mehreren Netzwerkelementen des softwaredefinierten Netzwerks auf der Basis der zweiten Informationen als Reaktion auf eine Situation, in der die zweiten Informationen eine aufgetretene oder bevorstehende Änderung in dem softwaredefinierten Netzwerk angeben, und
- Senden der zweiten Konfigurationsdaten an das eine oder die mehreren Netzwerkelemente des softwaredefinierten Netzwerks, um das softwaredefinierte Netzwerk an die aufgetretene oder bevorstehende Änderung, die von den zweiten Informationen angegeben wurde, anzupassen.

3. Steuerungssystem nach Anspruch 1 oder 2, wobei die ersten Informationen eine geografische Verteilung einer Benutzerpopulation des softwaredefinierten Netzwerks angeben und das Verarbeitungssystem dazu eingerichtet ist, die ersten Konfigurationsdaten zum Anpassen des softwaredefinierten Netzwerks an Änderungen der geografischen Verteilung der Benutzerpopulation des softwaredefinierten Netzwerks zu erzeugen.

4. Steuerungssystem nach Anspruch 3, wobei das Verarbeitungssystem dazu eingerichtet ist, die ersten Konfigurationsdaten zum Neukonfigurieren von mindestens einem der folgenden auf der Basis der Änderungen der geografischen Topologie der Benutzerpopulation zu erzeugen: Routingtopologie von mindestens einem Teil des softwaredefinierten Netzwerks, Datenverwaltungsrichtlinie von einem oder mehreren der Netzwerkelemente des softwaredefinierten Netzwerks.

5. Steuerungssystem nach einem der Ansprüche 1-4, wobei die ersten Informationen physikalische Betriebsbedingungen von einer oder mehreren Datentransferverbindungen angeben und das Verarbeitungssystem dazu eingerichtet ist, die ersten Konfigurationsdaten zum Anpassen des softwaredefinierten Netzwerks an Änderungen der physikalischen Betriebsbedingungen von der einen oder den mehreren Datentransferverbindungen zu erzeugen.

6. Steuerungssystem nach Anspruch 5, wobei das Verarbeitungssystem dazu eingerichtet ist, die ersten Konfigurationsdaten zum Neukonfigurieren von mindestens einem der folgenden auf der Basis der Änderungen der physikalischen Betriebsbedingungen von der einen oder den mehreren Datentransferverbindungen zu erzeugen: Routingtopologie von mindestens einem Teil des softwaredefinierten Netzwerks, Datenverwaltungsrichtlinie von einem oder mehreren der Netzwerkelemente des softwaredefinierten Netzwerks.

7. Steuerungssystem nach Anspruch 2, wobei die zweiten Informationen eine Last des softwaredefinierten Netzwerks angeben und das Verarbeitungssystem dazu eingerichtet ist, die zweiten Konfigurationsdaten zum Anpassen des softwaredefinierten Netzwerks an Änderungen der Last des softwaredefinierten Netzwerks zu erzeugen.

8. Steuerungssystem nach Anspruch 7, wobei das Verarbeitungssystem dazu eingerichtet ist, die zweiten Konfigurationsdaten zum Neukonfigurieren von mindestens einem der folgenden auf der Basis der Änderungen der Last des softwaredefinierten Netzwerks zu erzeugen: Routingtopologie von mindestens einem Teil des softwaredefinierten Netzwerks, Datenverwaltungsrichtlinie von einem oder mehreren der Netzwerkelemente des softwaredefinierten Netzwerks.

9. Steuerungssystem nach Anspruch 2 oder 8, wobei die zweiten Informationen eine gemessene Dienstgüte, die von dem softwaredefinierten Netzwerk bereitgestellt wird, angeben und das Verarbeitungssystem dazu eingerichtet ist, die zweiten Konfigurationsdaten zum Anpassen des softwaredefinierten Netzwerks an Änderungen der gemessenen Dienstgüte zu erzeugen.

10. Steuerungssystem nach Anspruch 9, wobei das Verarbeitungssystem dazu eingerichtet ist, die zweiten Konfigurationsdaten zum Neukonfigurieren von mindestens einem der folgenden auf der Basis der Änderungen der gemessenen Dienstgüte zu erzeugen: Routingtopologie von mindestens einem Teil des softwaredefinierten Netzwerks, Datenverwaltungsrichtlinie von einem oder mehreren der Netzwerkelemente des softwaredefinierten Netzwerks.

11. Verfahren zur Steuerung eines softwaredefinierten Netzwerks, wobei das Verfahren Folgendes umfasst:
- Empfangen (301) von ersten Informationen, die ein vorhergesagtes oder aktuelles Wetter angeben und von einer oder mehreren externen Quellen außerhalb des softwaredefinierten Netzwerks bereitgestellt werden,
- Erzeugen (303) von ersten Konfigurationsdaten zum Ändern einer Konfiguration von einem oder mehreren Netzwerkelementen des softwaredefinierten Netzwerks auf der Basis der ersten Informationen als Reaktion auf eine Situation (302), in der die ersten Informationen eine aufgetretene oder bevorstehende Änderung von einer oder mehreren Betriebsbedingungen des softwaredefinierten Netzwerks angeben, und
- Senden (304) der ersten Konfigurationsdaten an das eine oder die mehreren Netzwerkelemente des softwaredefinierten Netzwerks, um das softwaredefinierte Netzwerk an die aufgetretene oder bevorstehende Änderung von der einen oder den mehreren Betriebsbedingungen des softwaredefinierten Netzwerks anzupassen.

12. Verfahren nach Anspruch 11, wobei das Verfahren weiterhin Folgendes umfasst:
- Empfangen von zweiten Informationen, die von dem softwaredefinierten Netzwerk erfasst wurden,
- Erzeugen von zweiten Konfigurationsdaten zum Ändern einer Konfiguration von dem einen oder den mehreren Netzwerkelementen des softwaredefinierten Netzwerks auf der Basis der zweiten Informationen als Reaktion auf eine Situation, in der die zweiten Informationen eine aufgetretene oder bevorstehende Änderung in dem softwaredefinierten Netzwerk angeben, und
- Senden der zweiten Konfigurationsdaten an das eine oder die mehreren Netzwerkelemente des softwaredefinierten Netzwerks, um das softwaredefinierte Netzwerk an die aufgetretene oder bevorstehende Änderung, die von den zweiten Informationen angegeben wurde, anzupassen.

13. Computerprogramm zur Steuerung eines softwaredefinierten Netzwerks, wobei das Computerprogramm computerausführbare Befehle zum Steuern eines programmierbaren Verarbeitungssystems zu Folgendem umfasst:
- Erzeugen von ersten Konfigurationsdaten zum Ändern einer Konfiguration von einem oder mehreren Netzwerkelementen des softwaredefinierten Netzwerks auf der Basis von ersten Informationen, die ein vorhergesagtes oder aktuelles Wetter angeben und von einer oder mehreren externen Quellen außerhalb des softwaredefinierten Netzwerks bereitgestellt werden, als Reaktion auf eine Situation, in der die ersten Informationen eine aufgetretene oder bevorstehende Änderung von einer oder mehreren Betriebsbedingungen des softwaredefinierten Netzwerks angeben, und
- Steuern einer Datentransferschnittstelle dahingehend, die ersten Konfigurationsdaten an das eine oder die mehreren Netzwerkelemente des softwaredefinierten Netzwerks zu senden, um das softwaredefinierte Netzwerk an die aufgetretene oder bevorstehende Änderung von der einen oder den mehreren Betriebsbedingungen des softwaredefinierten Netzwerks anzupassen.

14. Softwaredefiniertes Netzwerk, umfassend:
- ein oder mehrere Netzwerkelemente (101-104) und
- ein Steuerungssystem (105) nach einem der Ansprüche 1-10 zur Steuerung von dem einen oder den mehreren Netzwerkelementen auf der Basis von Informationen, die ein vorhergesagtes oder aktuelles Wetter angeben und von einer oder mehreren externen Quellen außerhalb des softwaredefinierten Netzwerks bereitgestellt werden.

15. Softwaredefiniertes Netzwerk nach Anspruch 14, wobei das Steuerungssystem dazu konfiguriert ist, das OpenFlow als ein Kommunikationsverfahren für eine Steuerungsebene des softwaredefinierten Netzwerks zu verwenden, um mit einer Datenebene des softwaredefinierten Netzwerks zu kommunizieren.

## Revendications

1. Système de contrôleur (105,205) pour contrôler un réseau défini par logiciel, le système de contrôleur comprenant un système de traitement (210) et une interface de transfert de données (211) pour recevoir une première information indicative de prévisions météorologiques ou de conditions météorologiques actuelles et fournie par une ou plusieurs sources externes à l'extérieur du réseau défini par logiciel, dans lequel le système de traitement est adapté pour :
- générer des premières données de configuration pour changer une configuration d'un ou plusieurs éléments de réseau du réseau défini par logiciel sur la base de la première information en réponse à une situation dans laquelle la première information indique un changement survenu ou à venir d'une ou plusieurs conditions de fonctionnement du réseau défini par logiciel et
- commander l'interface de transfert de données afin d'envoyer les premières données de configuration vers un ou plusieurs éléments de réseau du réseau défini par logiciel de manière à adapter le réseau défini par logiciel au changement survenu ou à venir d'une ou plusieurs conditions de fonctionnement du réseau défini par logiciel.

2. Système de contrôleur selon la revendication 1, dans lequel le système de traitement est en outre adapté pour :
- recevoir une seconde information collectée du réseau défini par logiciel ;
- générer des secondes données de configuration pour changer une configuration d'un ou plusieurs éléments de réseau du réseau défini par logiciel sur la base de la seconde information en réponse à une situation dans laquelle la seconde information indique un changement survenu ou à venir dans le réseau défini par logiciel et
- envoyer à un ou plusieurs éléments de réseau du réseau défini par logiciel les secondes données de configuration de manière à adapter le réseau défini par logiciel au changements survenu ou à venir indiqué par la seconde information.

3. Système de contrôleur selon la revendication 1 ou 2, dans lequel la première information indique une distribution géographique de population d'utilisateur du réseau défini par logiciel et le système de traitement est adapté pour générer les premières données de configuration pour adapter le réseau défini par logiciel au changement de distribution géographique de la population d'utilisateur du réseau défini par logiciel.

4. Système de contrôleur selon la revendication 3, dans lequel le système de traitement est adapté pour générer les premières données de configuration pour reconfigurer au moins un des suivants sur la base des changements de la distribution géographique de la population d'utilisateur: topologie de routage d'au moins une partie du réseau défini par logiciel, politique de gestion de données d'un ou plusieurs des éléments de réseau du réseau défini par logiciel.

5. Système de contrôleur selon une quelconque des revendications 1-4, dans lequel la première information indique des conditions de fonctionnement physique d'une ou plusieurs liaisons de transfert de données et le système de traitement est adapté pour générer les premières données de configuration pour adapter le réseau défini par logiciel au changement des conditions de fonctionnement physique d'une ou plusieurs liaisons de transfert de données.

6. Système de contrôleur selon la revendication 5, dans lequel le système de traitement est adapté pour générer les premières données de configuration pour reconfigurer au moins un des suivants sur la base des changements des conditions de fonctionnement physique d'une ou plusieurs liaisons de transfert de données : topologie de routage d'au moins une partie du réseau défini par logiciel, politique de gestion de données dans plusieurs des éléments de réseau du réseau défini par logiciel.

7. Système de contrôleur selon la revendication 2, dans lequel la seconde information indique une charge du réseau défini par logiciel et le système de traitement est adapté pour générer les secondes données de configuration pour adapter le réseau défini par logiciel aux changements de la charge du réseau défini par logiciel.

8. Système de contrôleur selon la revendication 7, dans lequel le système de traitement est adapté pour générer les secondes données de configuration pour reconfigurer au moins un des suivants sur la base du changement de charge du réseau défini par logiciel : topologie de routage d'au moins une partie du réseau défini par logiciel, politique de gestion de données dans plusieurs des éléments de réseau du réseau défini par logiciel.

9. Système de contrôleur selon la revendication 2 ou 8, dans lequel la seconde information indique une qualité de service mesurée fournie par le réseau défini par logiciel et le système de traitement est adapté pour générer les secondes données de configuration pour adapter le réseau défini par logiciel aux changements de la qualité de service mesurée.

10. Système de contrôleur selon la revendication 9, dans lequel le système de traitement est adapté pour générer les secondes données de configuration pour reconfigurer au moins un des suivants sur la base des changements de la qualité de service mesuré : topologie de routage d'au moins une partie du réseau défini par logiciel, politique de gestion de données d'un ou plusieurs des éléments de réseau du réseau défini par logiciel.

11. Procédé de commande d'un réseau défini par logiciel, dans lequel le procédé comprend de :
- recevoir (301) une première information indicative de prévisions météorologiques ou de conditions météorologiques actuelles et fournie par une ou plusieurs sources externes à l'extérieur du réseau défini par logiciel,
- générer (303) des premières données de configuration pour changer une configuration d'un ou plusieurs éléments de réseau du réseau défini par logiciel sur la base de la première information en réponse à une situation (302) dans laquelle la première information indique un changement survenu ou à venir d'une ou plusieurs conditions de fonctionnement du réseau défini par logiciel et
- envoyer (304), à un ou plusieurs éléments de réseau du réseau défini par logiciel, les premières données de configuration de manière à adapter le réseau défini par logiciel au changement survenu ou à venir des conditions de fonctionnement du réseau défini par logiciel.

12. Procédé selon la revendication 11, dans lequel le procédé comprend en outre de :
- recevoir une seconde information collectée du réseau défini par logiciel,
- générer des secondes données de configuration pour changer une configuration d'un ou plusieurs éléments de réseau du réseau défini par logiciel sur la base de la seconde information en réponse à une situation dans laquelle la seconde information indique un changement survenu ou à venir dans le réseau défini par logiciel et
- envoyer, à un ou plusieurs éléments de réseau du réseau défini par logiciel, les seconds données de configuration de manière à adapter le réseau défini par logiciel au changements survenu ou à venir indiqué par la seconde information.

13. Programme informatique pour commander un réseau défini par logiciel, dans lequel le programme informatique comprend des instructions exécutables par ordinateur pour commander un système de traitement programmable afin de :
- générer des premières données de configuration pour changer une configuration d'un ou plusieurs éléments de réseau du réseau défini par logiciel sur la base de la première information indicative de prévisions météorologiques ou de conditions météorologiques actuelles par une ou plusieurs sources externes à l'extérieur du réseau défini par logiciel en réponse à une situation dans laquelle la première information indique un changement survenu ou à venir d'une ou plusieurs conditions de fonctionnement du réseau défini par logiciel et
- commander une interface de transfert de données pour envoyer, à un ou plusieurs éléments de réseau du réseau défini par logiciel, les premières données de configuration de manière à adapter le réseau défini par logiciel au changement survenu ou à venir des conditions de fonctionnement du réseau défini par logiciel.

14. Réseau défini par logiciel comprenant :
- un ou plusieurs éléments de réseau (101-104) et
- un système de contrôleur (105) selon une quelconque des revendications 1-10 pour commander le ou les éléments de réseau sur la base de l'information indicative de prévisions météorologiques ou de conditions météorologiques actuelles et fournies par une ou plusieurs sources externes à l'extérieur du réseau défini par logiciel.

15. Réseau défini par logiciel selon la revendication 14, dans lequel le système de contrôleur est configuré pour utiliser OpenFlow comme un procédé de communication pour un plan de commande du réseau défini par logiciel afin de communiquer avec un plan de données du réseau défini par logiciel.
